# EUROPEAN PATENT APPLICATION

(11) **EP 1 744 131 A1**
(43) Date of publication of application: **17.01.2007**
(21) Application number: 05106543.1
(22) Date of filing: 15.07.2005
(51) Int. Cl.: G01F 15/18

(54) **Module for a gas system**

(71) Applicant: Indufil B.V., 6921 RK Duiven (NL)
(72) Inventor: Pas, Peter Alexander Jozephus, 7044 AE Lengel (NL); Greter, Frits Nicolaas Johan Jacob, 6862 HV Oosterbeek (NL)
(74) Representative: van Westenbrugge, Andries

(57) **Abstract**

The invention relates to a module for a gas system operating at very high pressure, in particular at a pressure greater than 100 bar. The module comprises at least one solid metal block provided with a system of drilled channels as well as appendages connected to said channels and fixed to the block. The system of channels comprises a main channel with inlet end and an outlet end as well as at least one branch channel connected to the main channel. The appendages comprise at least one valve and at least one meter. The at least one meter comprises a flow meter and/or pressure meter connected to the branch channel. The at least one valve comprises a shut-off valve provided on the branch channel for shutting off or opening the branch channel. The invention furthermore relates to an assembly of one or more modules according to the invention, to a gas system provided with, inter alia, a module according to the invention and to the use of a module according to the invention.

## Description

The present invention relates to a module for a system containing a gas, for example an H-containing gas, which module is effective at very high pressure, in particular at a pressure higher than 100 bar.

According to the invention an H-containing gas is understood to be hydrocarbon gases, such as natural gas (CH₄), ethane gas (C₂H₆), propane gas (C₃H₈), butane gas (C₄H₁₀), dihydrogen sulphide (H₂S) and also hydrogen gas (H₂). An H-containing gas is usually dangerous because of the risk of explosion thereof. The gas system and the module according to the invention are, however, also suitable for gases that do not contain hydrogen, such as nitrogen (N₂), oxygen (O₂) or carbon dioxide (CO₂).

Systems operating with an H-containing gas are used, inter alia, in the petrochemical industry, both onshore and offshore. An example of a system operating with an H-containing gas is a transport system for transporting natural gas. Such gases are processed under very high pressures and are also readily inflammable, i.e. susceptible to explosion. With such systems it is thus important that every possible measure is taken to prevent leakage of H-containing gas into the environment. With such systems, measurements such as pressure measurements or flow measurements are also continuously carried out on the gas stream. In this context it is customary that meters are connected to the gas stream via various valves, such as shut-off valves, bleed valves, equaliser valves and the like. In this context it is conventionally customary that individual pipe sections are connected to one another as well as to various valves and measurement instruments. This is time-consuming, the construction takes up a great deal of space and, moreover, the construction is not readily accessible if work has to be carried out because various pipes are in the way.

The object of the present invention is, now, to simplify this complex system of pipe sections, appendages and connections between them.

According to the invention this object is achieved by providing a module for a system operating with a gas, which module is effective at very high pressure, in particular at a pressure higher than 100 bar, such as higher than 150 bar, wherein the module comprises:
- at least one solid metal block provided with a system of drilled channels;
- appendages connected to said channels and fixed to the block;
wherein the system of channels comprises a main channel as well as at least one branch channel connected to the main channel;
wherein the appendages comprise at least one valve and at least one meter;
wherein the at least one meter comprises a meter connected to the branch channel for measuring a flow value of the flow through the main channel of said system; and
wherein the at least one valve comprises a shut-off valve provided on the branch channel for shutting off or opening the branch channel.

By drilling the requisite channels in a solid metal block a very large number of individual pipe sections, which conventionally were connected to one another, are saved. This leads to a simplified construction.

A further advantage of the invention is that the risk of leakage of gas is substantially reduced. The known system has a large number of pipe sections that are connected to one another via various connectors, valves and meters. With this construction each connection constitutes a location susceptible to leaks. In practice one or more connections are frequently not completely leak-free after joining together the numerous components of the known system. This is even the case if the known system is constructed by an experienced specialist. According to the invention the number of connections and thus locations susceptible to leakage is substantially reduced because the channels have been drilled in a solid block.

The meter for measuring a flow value of the flow through the main channel of the system is, for example, a flow meter and/or pressure meter for measuring the flow through and the pressure in the main channel of the system, respectively.

Various appendages are connected to the block according to the invention. These appendages can comprise one or more meters and also one or more valves. The appendages can also comprise control members. Control members will usually be adjustable valves. A module according to the invention will comprise at least one meter and also at least one valve in the form of a shut-off valve. At least one main channel and at least one branch channel will have been drilled in the block. The main channel is for throughput of the main stream of gas on which measurements have to be carried out. The branch channel constitutes the connection to the meter. The shut-off valve is provided in order to be able to remove the meter without interrupting the main stream of gas. In another respect this shut-off valve also provides a safety feature, because in the event of faults in the meter, for example a leak, the shut-off valve can shut as a safety measure.

According to a further embodiment of the invention at least one valve furthermore comprises a so-called bleed valve, which on one side is connected to the at least one branch channel and on the other side opens into a flow opening. If the module is intended for an H-containing gas, the flow opening is, for example, connected to a feed or discharge channel for a gas that is inert with respect to the H-containing gas. With respect to an inert gas, consideration can be given here, for example, to nitrogen (N₂). By blowing such an inert gas into the system it is possible to drive the hazardous H-containing gas out of the system. On the one hand, the hazardous H-containing gas can leave the system via the bleed valve until outflow of the inert gas is detectable, which indicates that the system has been purged. The bleed valve functions as discharge here. On the other hand, the purpose of such a bleed valve is to enable an inert gas to be blown into the branch channel and thus to drive out the hazardous H-containing gas. In this way safety can be guaranteed during maintenance work.

According to one embodiment of the invention the at least one meter comprises an absolute pressure meter which is connected to the main channel via a single branch channel, which branch channel is provided with a said shut-off valve and a said bleed valve. An absolute pressure meter, is a meter that measures a pressure with respect to the ambient pressure. The Applicant has arrived at the insight that this module is one of the five standard modules by means of which a large number of diverse customer-specific systems can be constructed.

According to a further embodiment of the invention, the system of drilled channels comprises at least two branch channels, each of which contains a shut-off valve for shutting off or opening the branch channel concerned, wherein at least one branch channel is connected to the main channel and wherein the at least one meter is provided with a pressure difference meter, which is connected between said two branch channels. With this arrangement the pressure difference meter can be connected to the main channel via two of said branch channels by means of a said shut-off valve in each case.

In this case it is possible according to the invention that the branch channels, in the section between the shut-off valves and the connection to said meter, are connected to one another by a pressure equalisation channel, and the at least one valve furthermore comprises an equaliser valve provided in said pressure equalisation channel for opening and closing the equalisation channel. With such a meter, which is in communication with the main channel via two branch channels, it is important in the case of systems that operate with such high pressures, such as higher than 200 bar, to prevent this very high pressure difference reaching the meter when switching on and switching off the system. The meter is usually not able to withstand such high pressure differences, or is adapted to measure much smaller pressure differences. For this reason a pressure equalisation channel with an equaliser valve therein is provided between the branch channels. When switching on and switching off the system the pressure equaliser valve will be open so that a large pressure difference is not apparent at the meter. As soon as the system is then in operation the equaliser valve can be closed and the meter can start to operate. The Applicant has arrived at the insight that this module as well is a so-called standard module on the basis of which a large number of customer-specific systems can be made.

With this embodiment it is advantageous if two of said bleed valves are provided, each of which is connected to one of the respective branch channels. In this way it is ensured that the equaliser valve cannot prevent both branch channels being flushed clean with an inert gas. With this arrangement it is furthermore advantageous according to the invention if the bleed valves are connected to the equalisation channel on either side of the equaliser valve.

According to the invention it is advantageous if the system of drilled channels comprises at least one throughput channel that is connected between the branch channels, and where the appendages furthermore comprise a throttle device, which is provided in the throughput channel. The throttle device can be any flow control device or pressure control device, such as an adjustable valve. The flow through the throughput channel can be set using the throttle device. Preferably the throttle device is constructed as described in NL 1011661 C.

The throughput channel can, for example, be formed by the main channel with an inlet end and an outlet end. The throughput channel can, for example, also be an extension of the main channel. The throughput channel then forms a separate channel that at an input end thereof is connected to the main channel. This embodiment as well, in particular in combination with Claims 8, 7, 6 or 5, forms a so-called standard module by means of which highly diverse customer-specific systems can be constructed.

According to yet a further embodiment the main channel is connected via a link channel to the at least one branch channel, wherein a main shut-off valve is provided in the link channel. The main channel is connected via the link channel to the throughput channel. The main channel is therefore divided into a first main channel section that runs through the module and a second main channel section that forms the throughput channel and in which the throttle device is fitted. This embodiment as well, in particular in combination with the embodiment according to Claim 9 or 10 in combination with Claims 5 or 6 or 7 or 8, again forms a so-called standard module.

According to a further embodiment of the invention the main channel is designed for distribution of the gas to the module in question and also to one or more other devices, such as one or more modules according to the invention. In particular, the first main channel section is suitable for this purpose. The main channel thus makes coupling up of various modules according to the invention considerably easy. Only one connection on a module has to be provided and the main channel, which, in turn, can be connected to a main channel of a neighbouring module, ensures that the gas stream can be distributed over various modules. With this arrangement it is advantageous if a main shut-off valve is provided in the link channel.

According to yet a further embodiment of the invention it is advantageous if the throughput channel has an outlet end that is provided with a one-way valve or non-return valve (check valve), which only allows gas through that is flowing in the direction out of the module. If the throughput channel is formed by the main channel with an inlet end and an outlet end, a module can be provided with such a non-return valve (check valve) at the outlet end of the main channel. The non-return valve allows through only gas that flows in the direction from inlet end to outlet end in the main channel, in the intended direction of flow thereof. Such an embodiment has the advantage that it can be ensured that no gas flow back into the module can take place at the outlet end. Such a non-return valve is optionally also fitted at the inlet end, by means of which it is ensured that no gas flow from the module can flow back in the feed device at the inlet end. This is advantageous in particular in the case of modules for measurements on the buffer gas stream and/or regulation of the buffer gas stream. This module, in particular in combination with the module according to Claims 12, 11, 10 or 9 and one of Claims 5, 6, 7 or 8, in turn forms a so-called standard module by means of which highly diverse customer-specific systems can be composed.

In total, the Applicant has arrived at the insight that five standard modules can suffice.

According to the invention, the openings of the bores can easily be closed by placing a stopper or plug in said openings. Closed-off channels located entirely within the block can be produced in this way. If channels of a module have to be connected to another module, the stopper can be dispensed with in one or more locations.

For connecting channels in the metal block with one another it is advantageous according to the invention if one or more of the drilled channels of the channel system that are to be connected to one another cross one another some distance apart, and if a transverse bore for connecting them together is provided transversely to said crossing channels. The transverse bore can then be closed by a stopper or also in some other way at the opening on the outer surface of the metal block. It is also possible to provide a valve in said transverse bore, which valve will then assume the function of the plug at the opening of the transverse bore. On the outside of the block the valve can seal onto the block by means of a flange and a sealing ring. An operating member of the valve for adjusting the valve can then protrude from the outside of the block.

According to a further aspect the invention relates to an assembly comprising at least two modules according to the invention, wherein the blocks of two modules are positioned laterally against one another with, in each case, one or more openings of bores in the one block aligned with a corresponding number of openings of bores in the other block, said openings being connected to one another in a sealed manner in order to join channels in the one block to channels in the other block. In this way two or even more modules can be positioned laterally against one another and connected in a simple manner. In this context it is advantageous if the connection comprises a sleeve fitting in both openings, which sleeve has at least one sealing ring, such as two sealing rings, on each end to be accommodated in a respective opening, to produce a seal between the sleeve and the respective opening. A double seal is frequently required in applications at very high pressure, such as 200 bar, for safety reasons.

According to yet a further aspect, the present invention relates to a gas system, in particular for an H-containing gas, comprising:
- a gas compressor, in particular a centrifugal compressor, adapted for a pressure on the high pressure side of at least 100 bar, in particular 150 bar or more;
- a gas seal device comprising one or more modules according to one of Claims 1 - 14 and/or an assembly according to one of Claims 15 - 16;
wherein the gas compressor has an essentially closed housing in which one or more vanes, mounted on bearings on a drive shaft, are provided, wherein the drive shaft is mounted on bearings in the compressor housing on the high pressure side of the compressor and protrudes from the housing through a seal on the low pressure side of the compressor;
wherein the inlet of the gas seal device is connected to the high pressure side of the compressor;
wherein the outlet of the gas seal device is connected to the seal in order to force gas from the high pressure side of the compressor under pressure from outside the housing through the seal into the housing.

In such a gas system the gas seal device in particular has a gas filter. In the case of such a gas filter consideration can be given in particular, but not exclusively, to a gas filter device as described in EP 1 230 503 B1 in the name of Indufil B.V.

Such a gas system furthermore has, in particular, a buffer gas device adapted for purging the gas system with a gas inert to the H-containing gas. The buffer gas device according to the invention can also comprise one or more standard modules described above.

According to yet a further aspect, the present invention relates to the use of a module, assembly or gas system according to the invention, at a gas pressure of at least 100 bar, such as at least 150 or 200 bar.

The invention will now be described in more detail with reference to an illustrative embodiment shown in the drawing.
Figure 1 shows a diagrammatic cross-sectional view of an H-containing gas system according to the invention.
Figure 2a shows a front view of part of the sealing gas system according to the invention.
Figure 2b shows a side view of the part of the sealing gas system shown in Figure 2a.
Figure 3 shows a diagrammatic process diagram of the sealing gas system shown in Figures 2a and 2b.
Figure 4a shows a front view of a first standard module according to the invention.
Figure 4b shows a diagrammatic process diagram of the standard module shown in Figure 4a.
Figure 5a shows a front view of a second standard module according to the invention.
Figure 5b shows a diagrammatic process diagram of the module shown in Figure 5a.
Figure 6a shows a front view of a third standard module according to the invention.
Figure 6b shows a diagrammatic process diagram of the module shown in Figure 6a.
Figure 7a shows a front view of a fourth standard module according to the invention.
Figure 7b shows a diagrammatic process diagram of the module shown in Figure 7a.
Figure 8a shows a front view of a fifth standard module according to the invention.
Figure 8b shows a diagrammatic process diagram of the module shown in Figure 8a.
Figure 9 shows a plan view of an assembly comprising three standard modules according to the invention.
Figure 10 shows detail X from Figure 9.
Figure 11 shows detail XI from Figure 9.
Figure 12 shows a cross-sectional view of a shut-off valve that has been fitted in a standard module according to the invention.

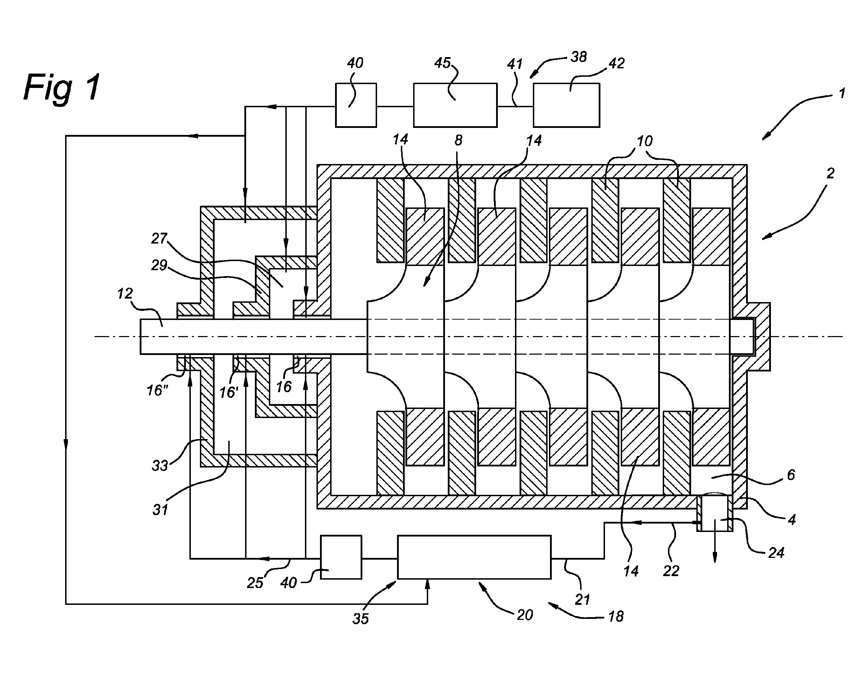

In Figure 1 the gas system according to the invention is indicated in its entirety by 1. During operation the gas system 1 partially contains, for example, natural gas or another H-containing gas. The gas system 1 comprises a gas compressor 2, which in this illustrative embodiment is constructed as a centrifugal compressor. The gas compressor 2 pumps an H-containing gas during operation.

The gas compressor 2 has a compressor housing 4 that delimits an essentially closed interior 6. A rotor 8 that can turn is accommodated in the compressor housing 4. The rotor 8 interacts with a stator 10 in the interior 6 of the compressor housing 4. The rotor 8 has a drive shaft on which several vanes 14 are fixed. The drive shaft 12 extends through a central opening 16 in the compressor housing 4.

During operation a very high pressure prevails in the interior 6 of the compressor housing 4. In practice, the pressure in the interior 6 close to the central opening 16 is about 200 bar. The gas system 1 according to the invention has a gas seal device or sealing gas device 18 that prevents the H-containing gas leaking out from the interior 6 between the drive shaft 12 and the central opening 16 under the influence of that pressure. The gas seal device 18 provides a seal between the drive shaft 12 and the central opening 16 of the compressor housing by feeding a sealing gas under high pressure. This sealing gas originates from the high pressure side of the compressor 2.

For this purpose the gas seal device 18 has a return system 20 that is provided with a main line 21. The main line 21 has an inlet 22 that is connected to the high pressure side of the compressor 2. In this illustrative embodiment the gas compressor 2 has a radial outlet 24, to which the inlet 22 of the gas seal device 18 is connected. During operation the gas seal device 18 can tap off gas under high pressure from the radial outlet 24.

The main line 21 is connected to the gap between the central opening 16 and the drive shaft 12. Such a gas seal lowers the pressure outside the interior 6 of the compressor housing 4. If the pressure in the interior 6 is approximately 200 bar, a pressure of approximately 120 bar still prevails in the adjacent chamber 27 outside the interior 6.

The chamber 27 is delimited by a protective casing 29. The protective casing 29 has a central opening 16' that is aligned with respect to the central opening 16 in the compressor housing 4. The drive shaft 12 also extends through the central opening 16' of the protective casing 29. The gap between the central opening 16' of the protective casing 29 and the drive shaft 12 is likewise sealed by the gas seal device 18. For this purpose the main line 21 is also connected to said gap concerned. As a result the pressure outside the chamber 27 delimited by the protective casing 29 is lower than inside it. If the pressure in the chamber 27 is approximately 120 bar, a pressure of approximately 60 bar still prevails outside it.

A further protective casing 33, which delimits a chamber 31, is therefore provided. The protective cap 33 likewise has a central opening 16" that is aligned with respect to the central openings 16, 16'. The drive shaft 12 of the rotor 8 also extends through said central opening 16" out of the protective casing 33. The main line 21 is also connected to the gap between the drive shaft 12 and the central opening 16" of the protective casing 33. The gas seal for the protective cap 33 formed in this way lowers the pressure to approximately ambient pressure.

The main line 21 of the gas seal device 18 branches via the distributor line 25 to three injection locations in the respective gaps between the drive shaft 12 and the central openings 16, 16', 16". The gas seal device 18 injects gas under high pressure at said injection locations, by means of which three respective gas seals are formed. As a result the pressure drops from the interior 6 of the compressor housing 4 stepwise down to ambient pressure.

Further protective casings and/or injection locations are, of course, possible for reducing the pressure. The number of protective casings is, for example, dependent on the pressure in the gas compressor.

The sealing gas fed to the gas seals must not contain any impurities. A sealing gas filter device 35 is therefore fitted in the main line 21 of the gas seal device 18. The sealing gas filter device 35 is described in EP 1 230 503 B1 in the name of Indufil B.V. The mode of operation thereof will therefore not be explained in more detail here.

Furthermore, various modules 40 according to the invention are connected to the main line 21. The modules 40 are designed to measure absolute pressure, pressure difference and/or mass flow. The modules 40 are also designed to control these parameters. If the values measured by the modules 40 give rise to alarm, as well as during maintenance work, the H-containing gas must be driven out of the system 1. After all, the H-containing gas, such as natural gas, constitutes a hazardous gas that can cause an explosion. A buffer gas device 38 is provided for driving the H-containing gas out of the system 1.

The buffer gas device 38 has a pressure vessel 42 for an inert gas, such as nitrogen. The pressure vessel 42 is connected via a main line 41 to the interior 6 of the compressor housing 4, the chamber 27 within the protective casing 29 as well as the chamber 31 within the protective casing 33. The main line 41 also opens into the sealing gas filter device 35.

A buffer gas filter device 45 for cleaning the buffer gas fed from the pressure vessel 42 is fitted in the main line 41 of the buffer gas device 38. Furthermore, modules 40 according to the invention are connected to the main line 41 of the buffer gas device 38. The modules 40 in the main line 41 are designed, corresponding to the modules 40 in the main line 21 of the gas seal device 18, for measuring and/or controlling absolute pressure, pressure difference and/or mass flow.

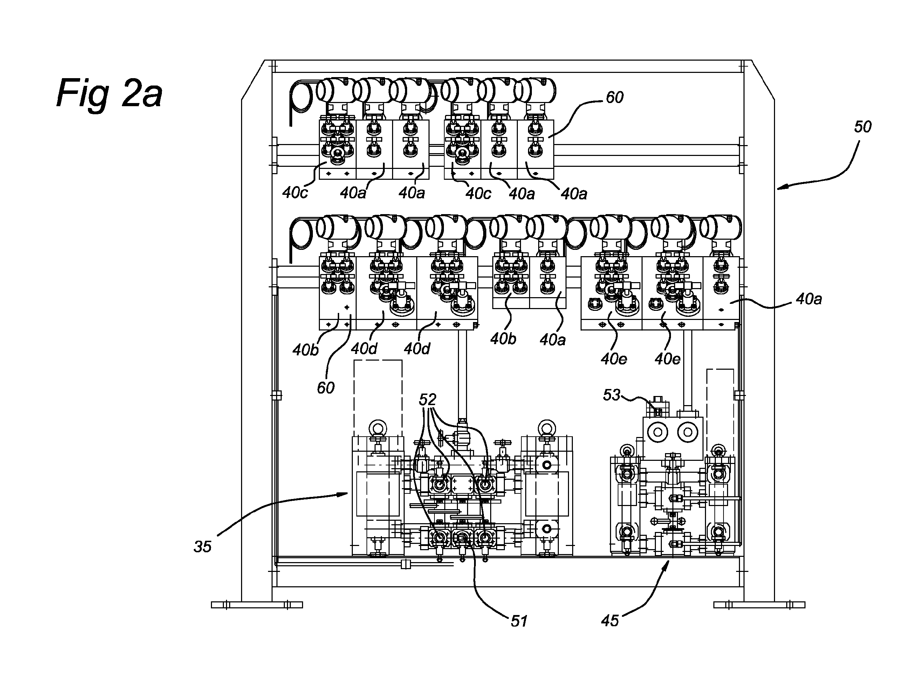

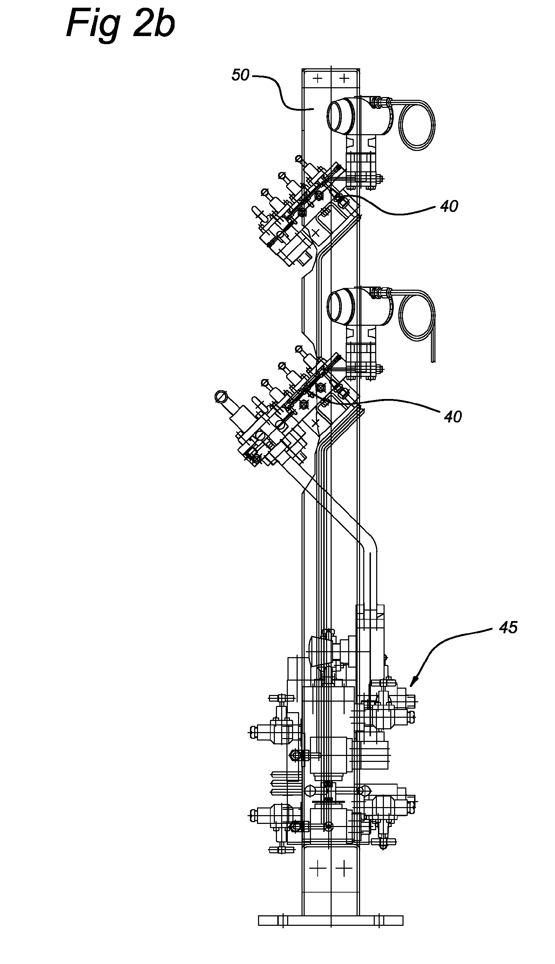

Figures 2a and 2b show a frame or rack 50. The sealing gas filter device 35 and the buffer gas filter device 45 are accommodated in the rack 50. The modules 40 connected thereto, as well as further modules 40 according to the invention, are likewise fitted in the rack 50.

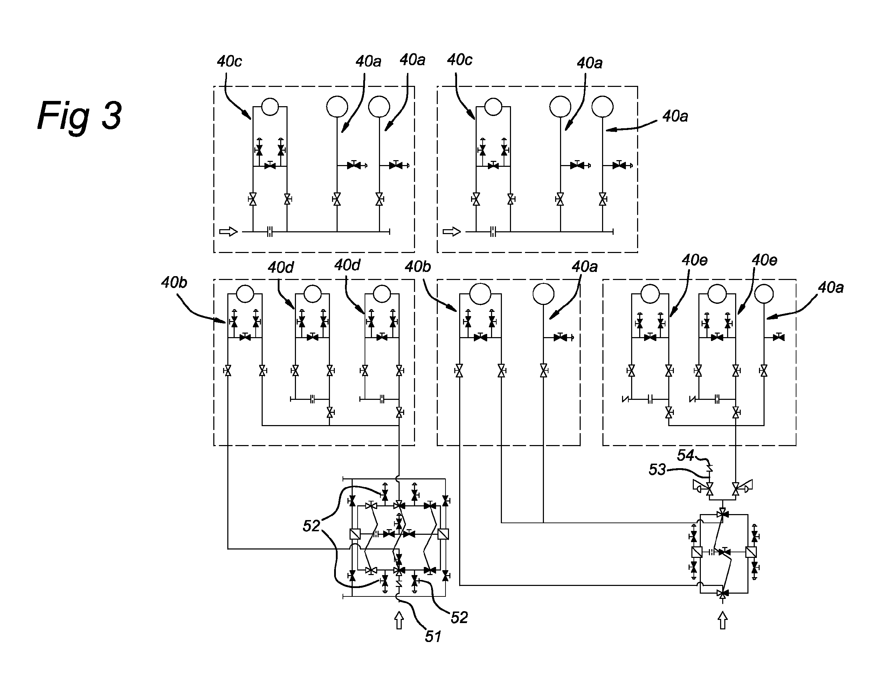

Figure 3 shows most clearly how the filter devices 35, 45 and the modules 40 are connected. The main line 21 from the gas seal device 18 opens into the inlet 51 of the sealing gas filter device 35. The sealing gas filter device 35 furthermore has bleed connections 52 for driving out the natural gas tapped off from the compressor 2 that is in the sealing gas filter device 35. The bleed connections 52 are, for example, connected to the outlet 53 of the buffer gas filter device 45 (not shown). The outlet 53 of the buffer gas filter device 45 is provided with a non-return valve 54. The non-return valve 54 prevents hazardous gas being able to reach the safe buffer gas device 38.

The modules 40 comprise five standard modules 40a, 40b, 40c, 40d and 40e. The entire functionality of the process diagram shown diagrammatically in Figure 3 can be achieved with these five standard modules 40a, 40b, 40c, 40d, 40e. Each standard module 40a, 40b, 40c, 40d, 40e has at least one solid metal block 60 that is provided with a system of drilled channels. The block 60 is preferably made of stainless steel. Each module 40a, 40b, 40c, 40d, 40e furthermore has a number of appendages that are connected to said drilled channels and are fixed to the block 60. The appendages can comprise one or more meters as well as one or more valves. The appendages can furthermore comprise control members, such as adjustable valves.

In practice each module 40a, 40b, 40c, 40d, 40e frequently operates at a pressure of approximately 200 bar. However, the module according to the invention can also be suitable for a pressure of 400 bar or higher. If the pressure is greater than 400 bar there is the chance that the gas starts to behave as a liquid. This is dependent on the operating temperature. If the gas is liquid, the medium has a higher relative density. Sealing will be simplified as a result.

Very compact construction of the measurement and control system is possible using the standard modules 40a, 40b, 40c, 40d, 40e according to the invention. Each module has, for example, a length dimension of only 29 cm. As a result the rack 50 shown in Figures 2a and 2b can likewise have compact dimensions, for example a width dimension of 1.95 m and a height dimension of 1.80 m. At such a height all meters can be read clearly.

The five standard modules 40a, 40b, 40c, 40d, 40e will be explained successively below.

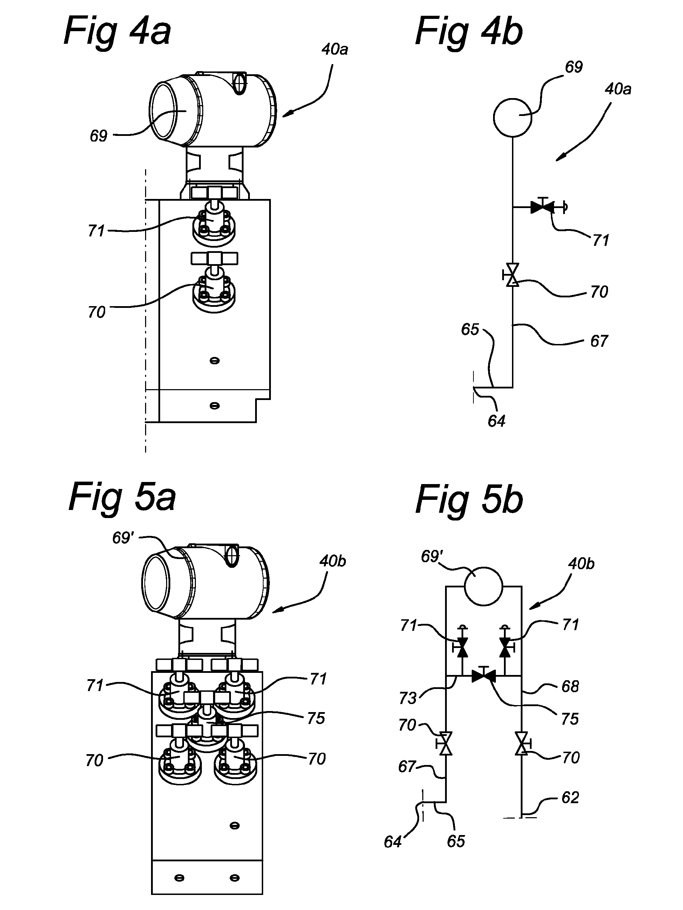

The first standard module 40a shown in Figures 4a and 4b has a main channel 65, which, for example, is connected to the main line 21 or 41. The main channel 65 has an inlet end 64. The module 40a furthermore has a branch channel 67 connected to the main channel 65. The appendages of the module 40a comprise a meter 69 for measuring an absolute pressure. The measurement range of the meter 69 is, for example between 100 and 400 bar. The meter 69 is connected to the branch channel 67.

The module 40a has a further appendage that is constituted by a valve. The valve is a shut-off valve 70 that is fitted in the branch channel 67. The shut-off valve 70 is open during operation. After shutting off the branch channel 67 by means of the shut-off valve 70, uncoupling of the meter 69 is possible. This is, for example, necessary in connection with maintenance work, such as replacement of the meter 69.

In addition, the module 40a has a bleed valve 71, which constitutes a further appendage. The bleed valve 71 is connected to the branch channel 67 between the shut-off valve 70 and the meter 69. The bleed valve 71 serves to feed or discharge inert gas, such as nitrogen, that originates from the buffer gas device 38. An inert gas fed via the bleed valve 71 can drive the hazardous natural gas out of the module 40a. As an alternative, it is possible to feed an inert gas via the main channel 65. The bleed valve 61 then acts as discharge.

Figures 5a and 5b show the second standard module 40b, where the same components are indicated by the same reference numerals. Corresponding to module 40a, the module 40b has a main channel 65, which, for example, is connected to the main line 21 or 41. The main channel 65 has an inlet end 64. The branch channel 67, which is connected to the main channel 65, can, incidentally, be located in the extension thereof. The system of drilled channels in module 40b furthermore has a second branch channel 68. A shut-off valve 70 for shutting off or opening the relevant branch channel 67, 68 is provided in each branch channel 67, 68. The shut-off valves 70 can uncouple the module 40b by the closure thereof. A meter 69' for measuring a pressure difference is connected between the ends of the branch channels 67, 68. The meter 69' measures the pressure difference between the pressure in the main channel 65 and the pressure that is connected at the free end 62 of the second branch channel 68.

In the section between the shut-off valves 70 and the meter 69' the module 40b has a pressure equalisation channel 73 that can connect the branch channels 67, 68 to one another. An equaliser valve 75 for opening and closing the equalisation channel 73 is fitted in the pressure equalisation channel 73. The meter 69' for measuring a pressure difference has only a limited range. Such a pressure difference meter is not able to withstand the very high pressures, such as approximately 200 bar, that prevail in the H-containing system. The equaliser valve 75 is therefore open during start-up of the system. The pressure then remains approximately the same on either side of the meter 69'. The equaliser valve 75 can then be closed, after which the meter 69' measures the pressure difference between the branch channels 67, 68.

The module 40b furthermore has two bleed valves 71 for feeding or discharging an inert buffer gas, such as nitrogen. The function and mode of operation of the bleed valves 71 of module 40b is comparable to that of module 40a. The bleed valves 71 are each connected to one of the respective branch channels 67, 68. In particular the bleed valves 71 are connected to the equalisation channel 73 on either side of the equaliser valve 75. By using two bleed valves 71 it is guaranteed that the module 40b can be completely purged, even if the equaliser valve 75 is closed.

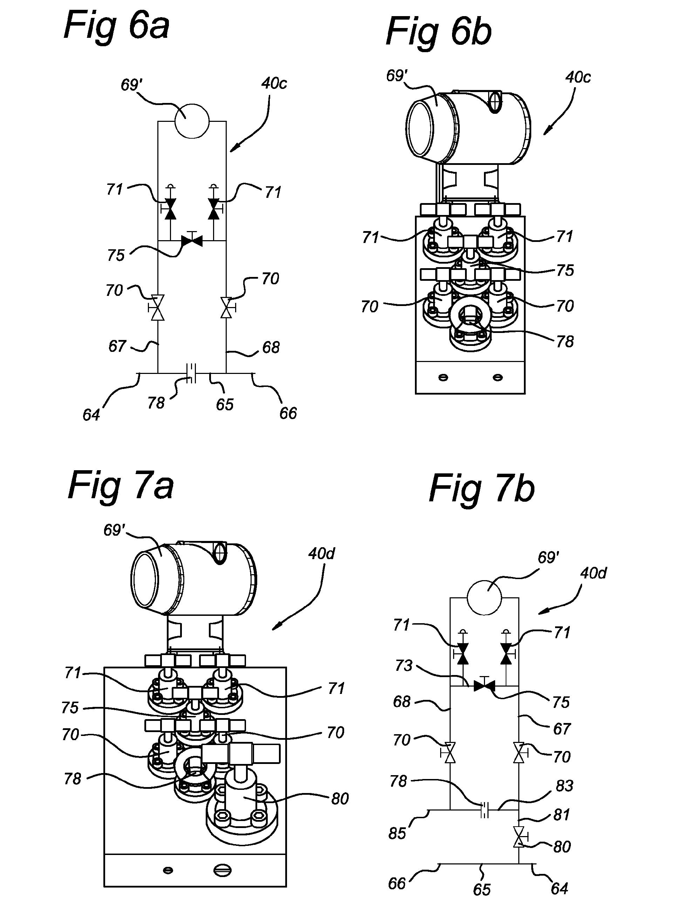

Figures 6a and 6b show the third standard module 40c according to the invention, where the same components are indicated by the same reference numerals. In the illustrative embodiment of the module 40c shown in Figures 6a and 6b the main channel 65 has an inlet end 64 and an outlet end 66. The branch channels 67, 68 are both connected to the main channel 65. A throttle device or regulator valve 78 is fitted in the main channel 65 between the branch channels 67, 68. The throttle device 78 can be operated to set the mass flow in the main channel 65. The main channel 65 therefore constitutes a throughput channel or pressure regulator channel. The pressure difference on either side of the throttle device 78 can be measured using the meter 69' for measuring a pressure difference.

The fourth standard module 40d is shown in Figures 7a and 7b, where the same components are therefore indicated by the same reference numerals. The standard module 40d has a main channel 65 with an inlet end 64 and an outlet end 66. Between the ends 64, 66 the main channel 65 is connected via a link channel 81 to the branch channel 67. A main shut-off valve 80 for shutting off or opening the link channel 81 is fitted in the link channel 81. The main shut-off valve 81 can therefore uncouple the standard module 40d from the main channel 65.

A throughput channel 83 or split-off section of the main channel 65, in which the throttle device 78 is incorporated, is connected between the branch channels 67, 68. When the main shut-off valve 80 is open, the same pressure prevails on the side of the branch channel 67 as in the main channel 65. On the opposite side of the throttle device 78, that is to say on the side of the branch channel 68, the throughput channel 83 has an outlet 85. The outlet 85 is connected to, for example, an injection port in a protective casing for sealing the compressor 2. The flow at the outlet 85 and at said injection port concerned can be set using the throttle device 78. The meter 69' measures the pressure difference over the throttle device 78.

The main channel 65 is therefore designed for distribution of the gas to said module 40d as well as to one or more other devices, such as one or more further standard modules 40. For this purpose the inlet end 64 and/or the outlet end 66 is connected to such a further standard module. The throughput channel 83 forms part of the main channel 65. After all, the main channel 65 continues via the link channel 81 into the throughput channel 83.

The function and mode of operation of the pressure equalisation channel 73 and the pressure equaliser valve 75 incorporated therein, as well as the function and mode of operation of the bleed valves 71 correspond to the standard modules 40b and 40c, which have been described above.

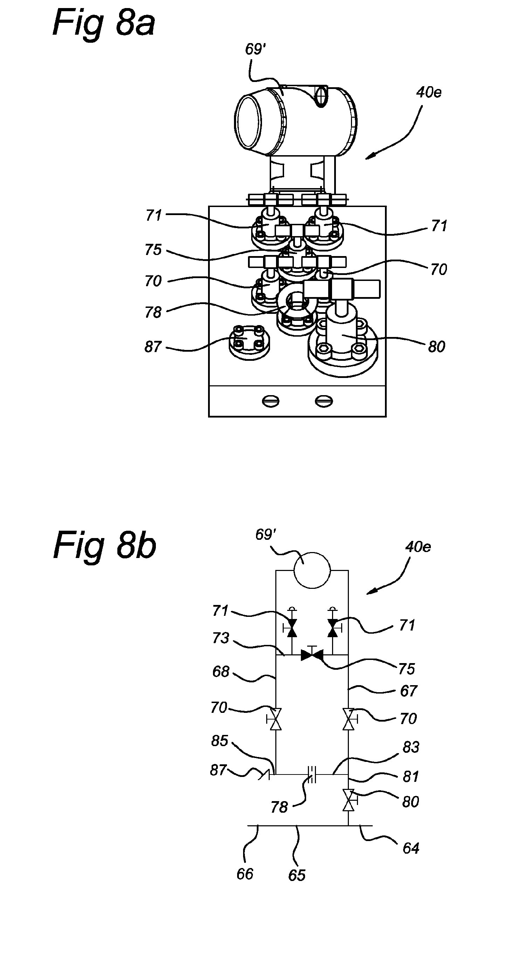

In Figures 8a and 8b the fifth standard module 40e is shown, where the same components are indicated by the same reference numerals. The standard module 40e differs from the standard module 40d described above only in that a non-return valve 87 is provided at the outlet 85 of the throughput channel 83. The standard module 40e is in particular suitable for the buffer gas device 38. The buffer gas device 38 constitutes a safe zone, which must be inaccessible to hazardous gas from the compressor 2. The non-return valve 87 prevents hazardous gas being able to reach said safe zone via the protective casing or the like. The buffer gas device 38 thus remains guaranteed free of hazardous gas.

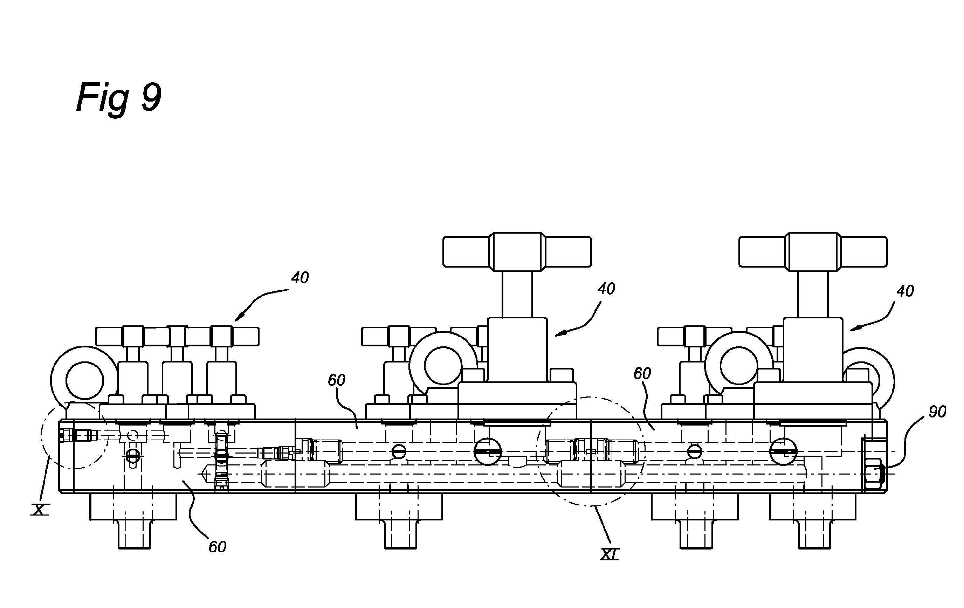

Figure 9 shows an assembly of three standard modules 40 according to the invention connected to one another. In this view the drilled channels in the solid metal blocks 60 of the standard modules 40 can also clearly be seen. The three standard modules 40 shown are fixed to one another by means of a draw bolt 90. The draw bolt 90 extends through mutually aligned fixing openings in the standard modules 40. These fixing openings are provided with internal threading. The internal drilled channels of two adjacent modules 40 adjoin one another along facing lateral surfaces 96 thereof.

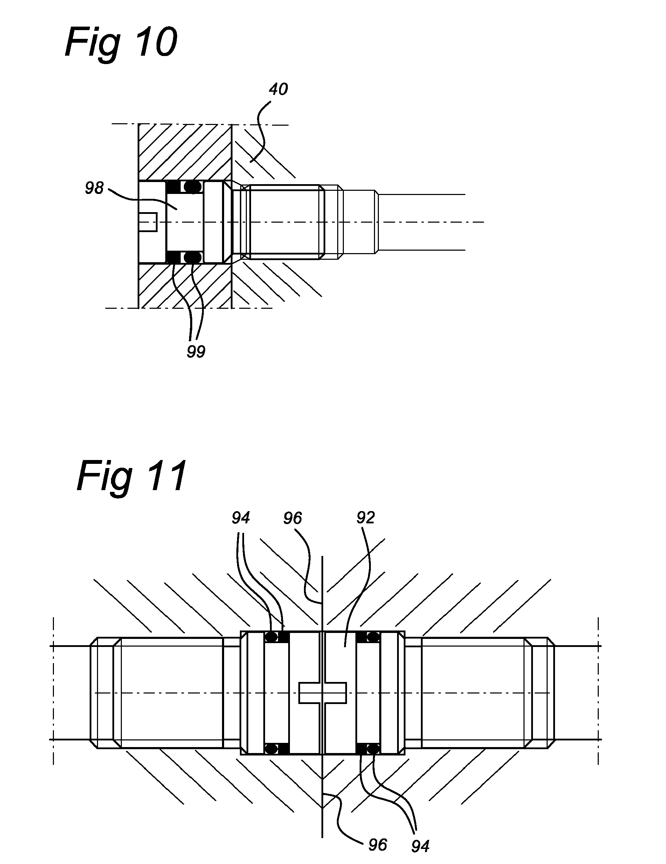

The leak-tight connection between two drilled channels in two different modules 40 is shown in detail in Figure 11. The leak-tight seal is provided by a connector sleeve 92 that is inserted in a widened accommodating opening in both modules 40. Each module 40 is sealed off from the surroundings by means of a double seal. This double seal for each module 40 comprises two sealing rings 94 that are arranged between the connector sleeve 92 and the widened accommodating opening for the connector sleeve 92.

There is some distance, for example 1 - 5 mm, between the lateral surface 96 of each module and the closest sealing ring 94. At high pressure the draw bolt 90 will stretch, as a result of which the lateral surfaces 96 of the modules are able to move apart to some extent. The sealing rings 94 still form an excellent seal after stretching of the draw bolts.

As shown in Figure 10, an interior drilled channel in a standard module can be closed off by a plug or stopper 98. Said stopper 98 provides a double seal by means of two sealing rings 99.

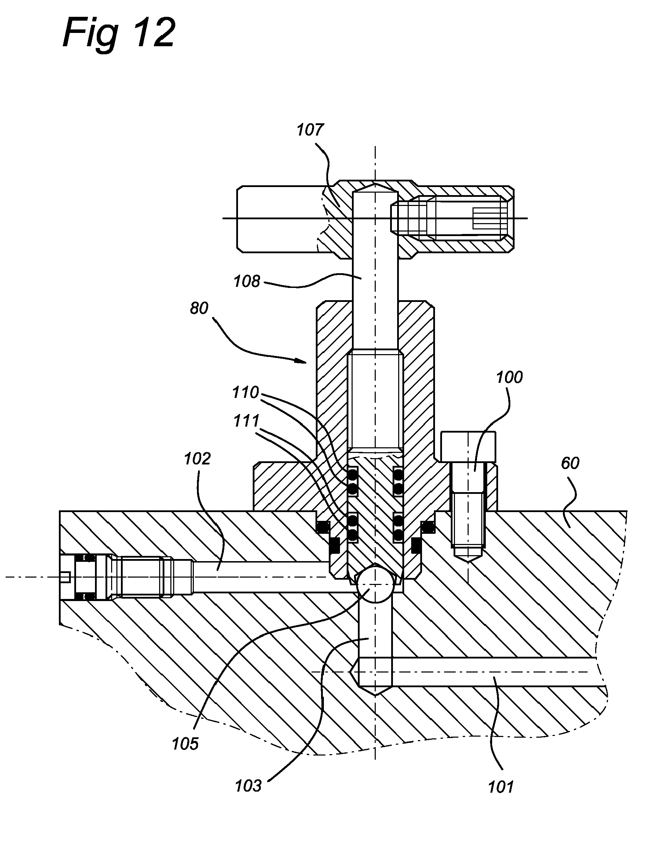

Figure 12 shows the main shut-off valve 80 that is fixed to the block 60 by means of fixing bolts 100, only one of which is visible. The further shut-off valves of the modules 40 can be of corresponding construction. The seals 110, 111 in each case form a double seal between the shut-off valve 80 and the block 60. The drilled channels 101, 102 of the channel system that are to be connected to one another are located in the block 60. These channels 101, 102 cross one another some distance apart. A transverse bore 103 for connecting said crossing channels 101, 102 to one another is provided transversely to said crossing channels 101, 102.

The main shut-off valve 80 has a ball 105 for shutting off the transverse bore 103. For this purpose the ball 105 has a diameter larger than the diameter of the transverse bore 103. The ball 105 can be moved by the handle 107 between a closed position and an open position. Figure 12 shows the closed position of the ball 105 in which the ball 105 has been driven onto a closing end of the transverse bore 103.

The closing end of the transverse bore 103 forms a valve seat for the ball 105. The ball 105 is made of a material that has a greater hardness than the material of the block 60. In this illustrative embodiment the ball 105 is made of ceramic, whilst the block is made of steel, such as stainless steel. The valve seat for the ball is formed by pressing the ball 105 onto the transverse bore 103 with a force that gives rise to plastic deformation of the edges of the transverse bore 103. For this purpose the shaft 108 is tightened with a predetermined tightening moment using the handle 107 before first use. The valve seat formed in this way and the associated ball 105 can provide an excellent seal by this means. After the valve seat has been formed the handle can move the ball into the closing position by exerting a lower tightening moment.

Ceramic has a very low coefficient of expansion. The ceramic ball 105 therefore provides an excellent seal irrespective of the temperature prevailing in the transverse bore 103. In the closed position of the ball 105 the transverse bore remains shut over a temperature range of -100 to +900 °C.

Of course, the invention is not restricted to the illustrative embodiment shown in the figures. A person skilled in the art can make various adaptations without going beyond the scope of protection of the invention.

## Claims

1. Module (40) for a system operating with a gas, which module (40) is adapted to withstand very high pressure during operation, in particular a pressure higher than 100 bar, such as higher than 150 bar;
wherein the module (40) comprises:
• at least one solid metal block (60) provided with a system (61) of drilled channels;
• appendages connected to said channels and fixed to the block;
wherein the system of channels comprises a main channel (65) as well as at least one branch channel (67) connected to the main channel (65);
wherein the appendages comprise at least one valve and at least one meter (69);
wherein the at least one meter (69) comprises a meter connected to the branch channel (67) for measuring a flow value of the flow through the main channel (65) of said system; and
wherein the at least one valve comprises a shut-off valve (70) provided on the branch channel (67) for closing or opening the branch channel (67).

2. Module according to Claim 1, wherein the at least one valve furthermore comprises a bleed valve (71), which on one side is connected to the at least one branch channel and on the other side opens into a flow opening.

3. Module according to Claim 2, wherein the module is intended to contain an H-containing gas and wherein the flow opening is connected to a feed or discharge channel for a gas that is inert with respect to the H-containing gas.

4. Module according to Claim 2 or 3, wherein the at least one meter comprises an absolute pressure meter (69) which is connected to the main channel (65) via a single said at least one branch channel (67) provided with a said shut-off valve (70) and a said bleed valve (71).

5. Module according to Claim 1 or 2, wherein the system of drilled channels comprises at least two branch channels (67, 68), each of which contains a shut-off valve (70) for closing or opening the branch channel (67, 68) concerned, wherein at least one branch channel (67) is connected to the main channel (65), and wherein the at least one meter is provided with a pressure difference meter (69'), which is connected between said two branch channels (67, 68).

6. Module according to Claim 5, wherein the branch channels (67, 68), in the section between the shut-off valves (70) and the connection to said meter (69'), are connected to one another by a pressure equalisation channel (73), and wherein the at least one valve furthermore comprises an equaliser valve (75) provided in said pressure equalisation channel (73) for opening and closing the equalisation channel (73).

7. Module according to Claim 5 or 6 in combination with Claim 2 or 3, comprising two of said bleed valves (71), each connected to one of the respective branch channels (67, 68).

8. Module according to Claim 7, wherein the bleed valves (71) are connected to the equalisation channel (73) on either side of the equaliser valve (75).

9. Module according to one of the preceding claims, wherein the system of drilled channels comprises at least one throughput channel (83) that is connected between the branch channels (67, 68), and wherein the appendages furthermore comprise a throttle device (78), which is provided in the throughput channel (83).

10. Module according to Claim 9, wherein the throughput channel (83) is constituted by the main channel (65).

11. Module according to one of the preceding claims, wherein the main channel (65) is connected via a link channel (81) to the at least one branch channel (67), and wherein a main shut-off valve (80) is provided in the link channel (81).

12. Module according to Claim 11, wherein the main channel (65) is adapted for distribution of the gas to said module (40) and also to one or more other devices, such as one or more modules (40) according to one of the preceding claims.

13. Module according to one of the preceding claims, wherein the throughput channel (83) has an outlet end (85) that is provided with a one-way valve (87) (check valve), which only allows gas through that is flowing in the direction out of the module (40).

14. Module according to one of the preceding claims, wherein one or more openings of the bores forming channels are closed off by a stopper (98).

15. Module according to one of the preceding claims, wherein one or more of the drilled channels (101, 102) of the channel system that are to be connected to one another cross one another some distance apart and wherein a transverse bore (103) for connecting them together is provided transversely to said crossing channels.

16. Module according to Claim 15, wherein a said at least one valve is provided in said transverse bore (103).

17. Module according to Claim 16, wherein the valve is provided with a shut-off valve which has a ball (105) with a diameter greater than the diameter of the transverse bore (103), which ball (105) can be driven onto a closing end of the transverse bore (103) to close off the transverse bore (103), and wherein the ball (105) is made of a material that has a greater hardness than the material of the block (60) in which the transverse bore (103) has been made, and wherein the transverse bore (103) has a valve seat for the ball (105) which is formed by pressing the ball (105) onto the transverse bore (103) with a force that gives rise to plastic deformation of the edges of the transverse bore (103).

18. Module according to Claim 17, wherein the ball (105) is made of ceramic.

19. Assembly comprising at least two modules (40) according to one or more of the preceding claims, wherein the blocks of two modules (40) are positioned laterally against one another with, in each case, one or more openings of bores in the one block aligned with a corresponding number of openings of bores in the other block, said openings being connected to one another in a sealed manner in order to join channels (65) in the one block to channels (65) in the other block.

20. Assembly according to Claim 19, wherein the connection comprises a sleeve fitting in both openings, which sleeve has at least one sealing ring on each end to be accommodated in a respective opening, to produce a seal between the sleeve and the respective opening.

21. Gas system, comprising:
• a gas compressor (2), in particular a centrifugal compressor, adapted for a pressure on the high pressure side of at least 100 bar, in particular 150 bar or more;
• a gas seal device comprising one or more modules (40) according to one of Claims 1 - 14 and/or an assembly according to one of Claims 15 - 16;
wherein the gas compressor (2) has an essentially closed housing (4) in which one or more vanes, mounted on bearings on a drive shaft, are provided, wherein the drive shaft is mounted on bearings in the compressor housing (4) on the high pressure side of the compressor (2) and protrudes from the housing (4) through a seal on the low pressure side of the compressor (2);
wherein the inlet of the gas seal device is connected to the high pressure side of the compressor (2);
wherein the outlet of the gas seal device is connected to the seal in order to force gas from the high pressure side of the compressor (2) under pressure from outside the housing through the seal into the housing.

22. Gas system according to Claim 21, wherein the gas seal device has a gas filter.

23. Gas system according to Claim 21 or 22, wherein the gas compressor (2) and the gas seal device can be filled with an H-containing gas, and wherein the gas system (1) furthermore has a buffer gas device adapted for purging the gas system with a gas that is inert to the H-containing gas.

24. Use of a module, assembly or gas system according to one of the respective preceding claims, at a gas pressure of at least 100 bar, such as at least 150 bar or at least 200 bar.
